# EUROPEAN PATENT APPLICATION

(11) **EP 4 769 695 A1**
(43) Date of publication of application: **01.07.2026**
(21) Application number: 25837758.9
(22) Date of filing: 09.07.2025
(51) Int. Cl.: H01M 50/169, H01M 50/107, H01M 50/55, H01M 50/249

(54) **BATTERY, BATTERY PACK AND VEHICLE COMPRISING SAME**

(30) Priority: 12.07.2024 KR 20240092467; 30.06.2025 KR 20250087112
(71) Applicant: LG Energy Solution, Ltd., Seoul 07335 (KR)
(72) Inventor: KIM, Do-Gyun, Daejeon 34122 (KR); KO, Kwang-Hun, Daejeon 34122 (KR); ROH, Sae-Weon, Daejeon 34122 (KR); JUNG, Sang-Suk, Daejeon 34122 (KR); JO, Min-Ki, Daejeon 34122 (KR); CHO, Sung-Min, Daejeon 34122 (KR)
(74) Representative: Goddar, Heinz J.
(86) International application number: PCT/KR2025/009984
(87) International publication number: WO 2026/014929

(57) **Abstract**

The present disclosure provides a battery including: a battery housing having a side wall, a bottom portion connected to one axial end of the side wall, and an open end provided at the other axial end of the side wall; an electrode assembly having a first electrode, a second electrode, and a separator interposed therebetween, which are wound around a winding axis, and accommodated inside the battery housing so that a tab of the second electrode is directed to the open end; and a lid configured to cover the open end and coupled to the battery housing, wherein an abutment portion is formed on a portion of an inner surface of the other axial end of the side wall, and wherein an outer circumferential surface of the lid and the abutment portion are coupled to each other.

## Description

### TECHNICAL FIELD

The present disclosure relates to a battery, and a battery pack and vehicle including the same.

This application is based on and claims priority from Korean Patent Application No. 10-2024-0092467, filed on July 12, 2024, and Korean Patent Application No. 10-2025-0087112, filed on June 30, 2025, with the Korean Intellectual Property Office, the disclosure of which is incorporated herein in its entirety by reference.

### BACKGROUND ART

Secondary batteries, which offer high applicability across product categories and possess electrical characteristics such as high energy density and the like, are widely applied not only to portable devices but also to electric vehicles (EVs) or hybrid electric vehicles (HEVs) that are driven by electric power sources.

Such secondary batteries are gaining attention as a new energy source for enhancing environmental sustainability and energy efficiency not only due to their primary advantage of significantly reducing the use of fossil fuels, but also because they generate no by-products from energy usage.

Secondary batteries that are currently widely used include lithium-ion batteries, lithium polymer batteries, nickel-cadmium batteries, nickel-metal hydride batteries, and nickel-zinc batteries. The operating voltage of this unit battery is approximately 2.5V to 4.5V.

Therefore, when an output voltage higher than this is required, a battery module or battery pack may be configured by connecting a plurality of battery cells in series. In addition, a battery module or battery pack may be configured by connecting multiple battery cells in parallel depending on the required charge/discharge capacity. Accordingly, the number of battery cells included in the battery module or battery pack and electrical connections thereof may be configured in various ways depending on at least one of the required output voltage and the charge/discharge capacity.

Battery cells may be classified into cylindrical, prismatic, and pouch-type battery cells. In the case of a cylindrical battery, a positive electrode plate, a negative electrode plate, and a separator interposed as an insulator therebetween are wound to form a jelly-roll-type electrode assembly, and this assembly is then inserted into the battery housing, along with an electrolyte, to form the battery.

As an embodiment, one side of a battery housing of a cylindrical battery may be open, and a lid may be welded to one side of the battery housing. However, if a sufficient contact area is not secured between the battery housing and the lid, the weldability between the battery housing and the lid may deteriorate, leading to reduced weld strength or electrolyte leakage, which may increase product defects.

Recently, seam welding has been studied as a method of coupling the lid and battery housing, replacing bead and crimping methods. The seam welding is a process of coupling the inner surface of a side wall of the battery housing and the outer surface of the lid by welding to assemble them. Meanwhile, in order to increase the seam welding strength, the contact area at the joint between the battery housing and lid must be wide, and the gap between the lid and the battery housing must be minimized.

### DISCLOSURE

### Technical Problem

The present disclosure is designed to solve the problems of the related art, and therefore the present disclosure is directed to providing a welding structure for a battery housing and a lid, which is capable of maximizing the contact area between the battery housing and lid, and a battery having the welding structure applied.

In addition, the present disclosure is directed to providing a new force-fitting structure capable of increasing the contact area between the battery housing and lid and improving weld strength, and a battery having the structure applied.

Furthermore, the present disclosure is directed to providing a cylindrical battery capable of reducing product defects caused by reduced weld strength or electrolyte leakage, and a battery pack and vehicle including the same.

However, the technical problems that the present disclosure seeks to solve are not limited to the above-mentioned problems, and other problems not mentioned above will be clearly understood by those skilled in the art from the description of the invention described below.

### Technical Solution

According to one aspect of the present disclosure, there are provided a battery as described in the following embodiment, and a battery pack and vehicle including the same.

According to the first implementation, there is provided a battery including: a battery housing having a side wall, a bottom portion connected to one axial end of the side wall, and an open end provided at the other axial end of the side wall; an electrode assembly having a first electrode, a second electrode, and a separator interposed therebetween, which are wound around a winding axis, and accommodated inside the battery housing so that a tab of the second electrode is directed to the open end; and a lid configured to cover the open end and coupled to the battery housing, wherein an abutment portion is formed on a portion of an inner surface of the other axial end of the side wall, and wherein an outer circumferential surface of the lid and the abutment portion are coupled to each other.

According to the second implementation, in the first implementation, the abutment portion may be in contact with the outer circumferential surface of the lid by 40% or more of a height of the outer circumferential surface of the lid, based on a cross-section parallel to an axial direction.

According to the third implementation, in one of the first and second implementations, the abutment portion may be in contact with the outer circumferential surface of the lid by a length of 0.3 mm or more, based on a cross-section parallel to an axial direction.

According to the fourth implementation, in one of the first to third implementations, a height of the outer circumferential surface of the lid may be 0.5 mm to 0.8 mm, based on a cross-section parallel to an axial direction.

According to the fifth implementation, in one of the first to fourth implementations, the battery housing may include a horizontal portion perpendicular to an axial direction, and a plating layer may be formed on the horizontal portion.

According to the sixth implementation, in one of the first to fifth implementations, at a maximum press-fit depth of the lid, there is substantially no step between the horizontal portion and an outer surface of the lid.

According to the seventh implementation, in one of the first to sixth implementations, a first inclined portion may be formed to be connected to the abutment portion and such that an inner diameter of the battery housing increases in an axially outward direction.

According to the eighth implementation, in the seventh implementation, a height of the first inclined portion may be 0.3 mm or less.

According to the ninth implementation, in one of the seventh to eighth implementations, the first inclined portion may be a flat inclined portion, a curved inclined portion, or a combination thereof.

According to the tenth implementation, in one of the seventh to ninth implementations, the first inclined portion may be formed by a trimming process, a cutting process, or a combination thereof for the battery housing.

According to the eleventh implementation, in one of the first to tenth implementations, the abutment portion may be formed by a cutting process, and the abutment portion may be in contact with the outer circumferential surface of the lid by 0.5 mm or more, based on a cross-section parallel to an axial direction.

According to the twelfth implementation, in one of the first to eleventh implementations, the bottom portion of the battery housing may have a first electrode terminal provided to be electrically insulated from and fixed to the bottom portion, and the first electrode of the electrode assembly may be electrically connected to the first electrode terminal.

According to the thirteenth implementation, there is provided a battery pack including a battery cell according to any one of the first to twelfth implementations.

According to the fourteenth implementation, there is provided a vehicle including a battery pack according to the thirteenth implementation.

### Advantageous Effects

A battery according to one aspect of the present disclosure can improve welding strength and enhance product durability and reliability by maximizing the contact area between the battery housing and the lid.

In addition, a battery according to one aspect of the present disclosure can increase the contact area between the battery housing and the lid, and more effectively secure welding strength through a new force-fitting structure.

In addition, a battery according to one aspect of the present disclosure can reduce product defects caused by reduced welding strength or electrolyte leakage, thereby improving overall product quality.

Furthermore, a battery according to one aspect of the present disclosure, based on these effects, can improve the quality and safety of cylindrical batteries and those of battery packs and vehicles including them.

However, the effects obtainable from the present disclosure are not limited to the above-mentioned effects, and other effects not mentioned above will be clearly understood by those skilled in the art from the description of the invention described below.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1A schematically illustrates the exterior of a battery according to an embodiment of the present disclosure.
FIG. 1B schematically illustrates a molding process of a conventional battery housing.
FIG. 1C schematically illustrates a can trimming process of a battery housing according to an embodiment of the present disclosure.
FIG. 1D schematically illustrates a cutting process of a battery housing according to an embodiment of the present disclosure.
FIG. 1E schematically illustrates a molding process of a battery housing according to an embodiment of the present disclosure.
FIG. 2 is a schematic exploded perspective view of an electrode assembly according to an embodiment of the present disclosure.
FIG. 3 schematically illustrates a laminate of an electrode assembly according to an embodiment of the present disclosure.
FIG. 4 schematically illustrates an electrode assembly manufactured by winding a laminate of an electrode assembly into a jelly-roll shape according to an embodiment of the present disclosure.
FIG. 5 schematically illustrates an electrode assembly manufactured by winding a laminate of electrode assembly into a jelly-roll shape according to an embodiment of the present disclosure.
FIG. 6 schematically illustrates a jelly-roll-shaped electrode assembly having one surface to which a current collector is attached and the other surface to which it is not attached according to an embodiment of the present disclosure.
FIG. 7 schematically illustrates a jelly-roll-shaped electrode assembly having one surface to which a current collector is attached and the other surface to which it is not attached according to an embodiment of the present disclosure.
FIG. 8 schematically illustrates a process of housing an electrode assembly inside a battery housing according to an embodiment of the present disclosure.
FIG. 9 schematically illustrates a configuration in which a battery housing and a lid are coupled according to an embodiment of the present disclosure.
FIG. 10A is a schematic enlarged view illustrating the coupling portion of a conventional battery housing and lid.
FIG. 10B is a schematic enlarged view illustrating the coupling portion of a battery housing and a lid according to an embodiment of the present disclosure.
FIG. 10C is a schematic enlarged view illustrating the coupling portion of a battery housing and a lid according to another embodiment of the present disclosure.
FIG. 10D is a schematic enlarged view illustrating the coupling portion of a battery housing and a lid according to another embodiment of the present disclosure.
FIG. 11 schematically illustrates a battery pack according to an embodiment of the present disclosure.
FIG. 12 schematically illustrates a vehicle according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

The terms used herein are intended only to describe exemplary embodiments, and are not intended to limit the present disclosure. The singular forms used herein are intended to include the plural forms as well, unless the context clearly indicates otherwise.

### <Definition>

Throughout this specification, the expression "an element 'includes' another component" should be construed as indicating that the element may further include other components, instead of excluding other components, unless state otherwise.

Throughout the specification, unless otherwise stated, respective elements may include a single or a plurality of elements.

Throughout the specification, configuration in which an element is disposed "in the upper portion (or lower portion)" or "at the top (or bottom)" of a target element may indicate that the element may be disposed in contact with the upper surface (or lower surface) of the target element and that another element may be interposed between the target element and the element disposed at the top (or bottom) of the target element.

Throughout the specification, the expression "an element is 'connected,' 'coupled,' or 'joined' to another element" should be understood that the two elements may be directly connected or joined to each other, and that another element may be "interposed" between the two elements, or that the two elements may be "connected," "coupled," or "joined" via another element.

Throughout the specification, unless otherwise stated, the expression "A and/or B" may refer to A, B, or both A and B, and the expression "C to D" may refer to a range including values equal to or greater than C and equal to or less than D.

Throughout the specification, an axial direction refers to a direction at which a winding axis of an electrode assembly wound in a jelly-roll shape extends, and a radial direction refers to a direction approaching or moving away from the winding axis, and a circumferential direction refers to a direction surrounding the axis.

The embodiments described in the present specification and the configurations illustrated in the drawings are merely the most preferred examples of the present disclosure, and do not represent the entirety of the technical concept of the present disclosure. Therefore, it should be understood that various equivalents and modifications capable of replacing them at the time of filing may exist.

The present disclosure provides a battery 1.

The battery of the present disclosure may be, for example, a cylindrical battery with a form factor ratio (defined as the ratio of the diameter (Φ) to the height (H) of a cylindrical battery, which is a value obtained by dividing the diameter of the cylindrical battery by the height) greater than about 0.4.

Here, the form factor refers to a value indicating the diameter and height of a cylindrical battery. Cylindrical batteries to be applied to the pressure tester may be, for example, 46110 cells, 48750 cells, 48110 cells, 48800 cells, or 46800 cells. In the form factor value, the first two digits indicate the cell diameter, the next two digits indicate the cell height, and the final digit "0" indicates that the cell has a circular cross-section.

The battery to be applied to the pressure tester may be a substantially cylindrical battery having a diameter of about 46 mm, a height of about 110 mm, and a form factor ratio of 0.418.

A battery according to another embodiment may be a substantially cylindrical battery having a diameter of about 48 mm, a height of about 75 mm, and a form factor ratio of 0.640.

A battery according to another embodiment may be a substantially cylindrical battery having a diameter of about 48 mm, a height of about 110 mm, and a form factor ratio of 0.418.

A battery according to another embodiment may be a substantially cylindrical battery having a diameter of about 48 mm, a height of about 80 mm, and a form factor ratio of 0.600.

A battery according to another embodiment may be a substantially cylindrical battery having a diameter of about 46 mm, a height of about 80 mm, and a form factor ratio of 0.575.

The pressure tester of the present disclosure may also be applied to battery cells having a form factor ratio of about 0.4 or less, such as 18650 cells and 21700 cells. The 18650 cell has a diameter of about 18 mm, a height of about 65 mm, and a form factor ratio of 0.277. The 21700 cell has a diameter of about 21 mm, a height of about 70 mm, and a form factor ratio of 0.300.

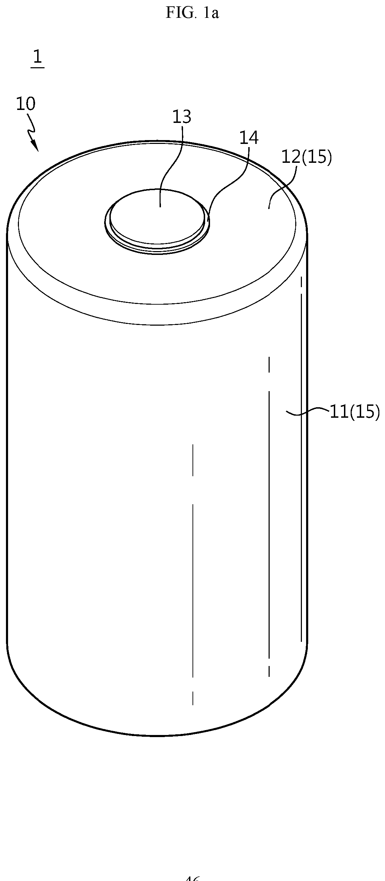

Referring to FIG. 1A, the battery housing 10 of the present disclosure includes a cylindrical side wall 11, a bottom portion 12 connected to one axial end of the side wall 11, and an open end provided at the other axial end of the side wall 11.

In an embodiment of the present disclosure, the side wall 11 may be manufactured by forming a conductive metal sheet using a deep drawing process, and then trimming the end of the side wall with a punch while holding it with a blank holder.

In an embodiment of the present disclosure, the conductive metal sheet may include, but is not limited to, aluminum, steel, stainless steel, and the like.

In an embodiment of the present disclosure, the metal sheet may have a plating layer on its surface, for example, a plating layer including Ni.

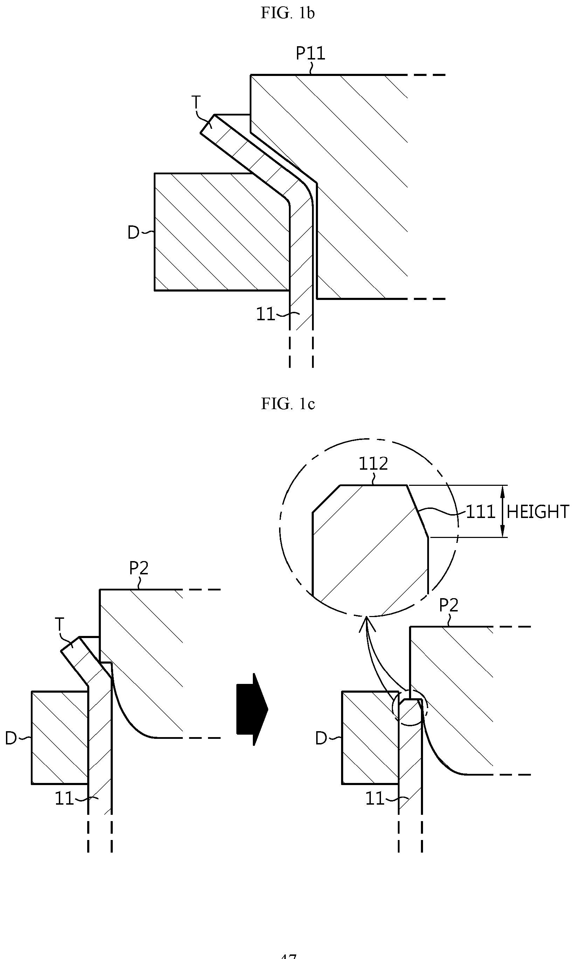

In general, as shown in FIG. 1B, a die D is positioned on the outer surface of the battery housing 10, and an angle forming trimming punch P11 is used to shape the inner surface of the battery housing, thereby forming a trimming portion T having a predetermined angle.

Thereafter, as shown in FIG. 1C, a die D is positioned on the outer surface of the battery housing 10, and a step portion (not shown) perpendicular to the side wall 11 is formed on the inner surface. Then, the trimming portion T is removed using a cutting means (not shown) provided on the punch P2, thereby forming a first inclined portion 111 on the side wall.

Specifically, the first inclined portion 111 is formed on a portion of the inner surface of the other axial end such that the inner diameter of the battery housing 10 increases in the axially outward direction.

Meanwhile, the height of the first inclined portion 111 formed on the conventional side wall, i.e., the height of the first inclined portion 111 in the axial cross-section with reference to FIG. 1C, is about 0.7 mm. However, the thickness of the lid 40, i.e., the height of the outer surface of the lid 40, is only about 0.6 mm. Therefore, when the lid is press-fitted into the battery housing, the first inclined portion is positioned at the point where the lid contacts the battery housing. As a result, the contact area between the lid and the battery housing is insufficient, making welding difficult.

The present disclosure aims to provide a battery housing 10 having a shape to ensure sufficient contact with the outer surface of the lid 40 to address the above-described problems.

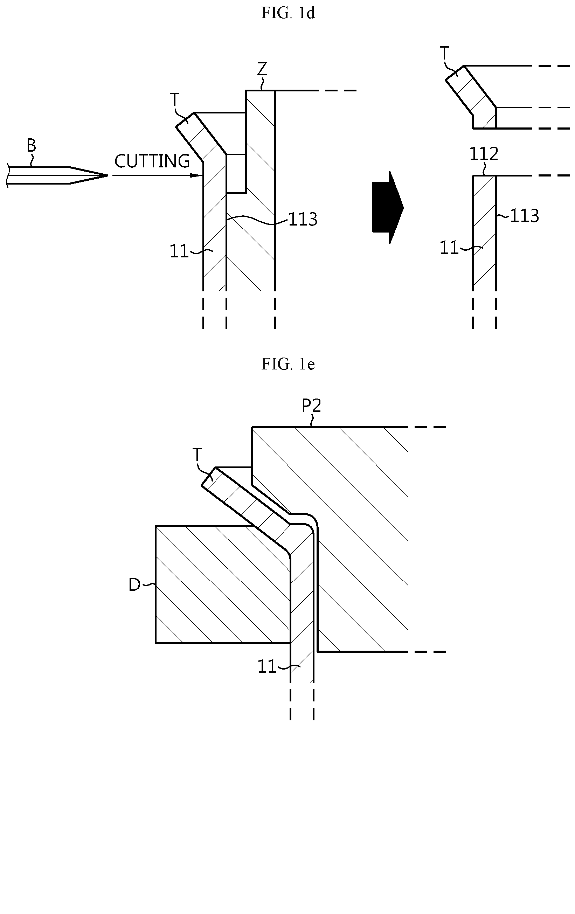

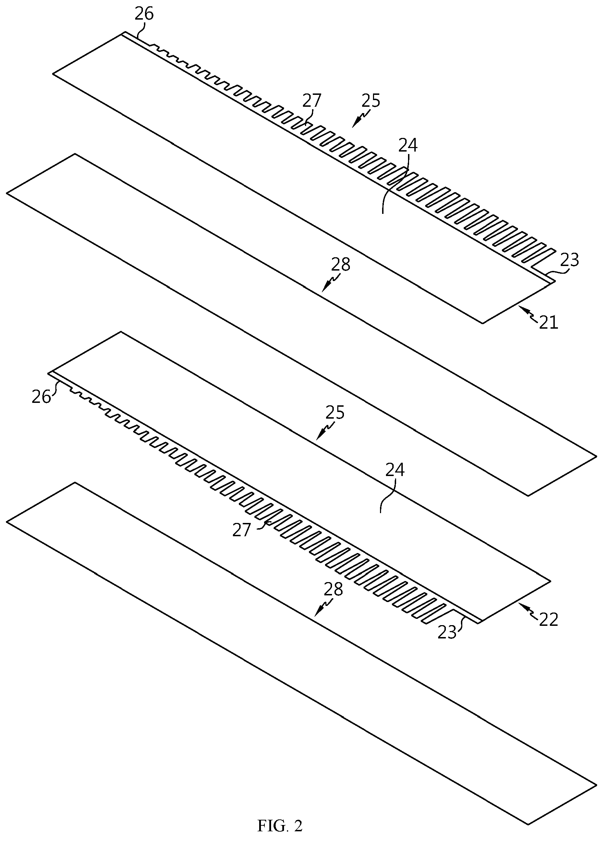

In an embodiment of the present disclosure, the battery housing 10 may be formed by deep-drawing a conductive metal sheet as described above, and then cut by a cutting means B while supporting the inner surface of the side wall 11 with a jig Z, as shown in FIG. 1D. The cutting means B may be a blade, a laser beam, or a combination thereof.

In addition, in an embodiment of the present disclosure, when the battery housing 10 is cut by a blade or laser beam, the battery housing 10 may have a horizontal portion 112 perpendicular to the side wall, and the side wall 11 parallel to the axial direction may be connected to the horizontal portion 112.

Alternatively, even when the battery housing 10 is cut by a blade or laser beam, the battery housing 10 may include a horizontal portion 112 and a first inclined portion 111 connected to the horizontal portion 112 and formed such that the inner diameter of the battery housing increases in the axially outward direction.

In this case, the first inclined portion 111 may have a very low height of 0.1 mm or less, more preferably 0.05 mm or less.

Meanwhile, in an embodiment of the present disclosure, a plating layer, for example, a plating layer including Ni, may be formed on the horizontal portion 112.

In another embodiment of the present disclosure, the battery housing 10 may be manufactured, as described above, by forming a conductive metal sheet through a deep drawing process, positioning a die D on the outer surface of the battery housing 10, as shown in FIG. 1E, and forming the inner surface of the battery housing into a shape close to a right angle or having a flat portion using an angle forming trimming punch P12.

Thereafter, as shown in FIG. 1C, a die D is positioned on the outer surface of the battery housing 10, and the trimming portion T is removed using a cutting means provided in the punch P2, thereby forming the first inclined portion 111 on the side wall.

Specifically, the first inclined portion 111 may be formed on a portion of the inner surface of the other axial end such that the inner diameter of the battery housing 10 increases in the axially outward direction. In this case, the height of the first inclined portion 111 may be 0.3 mm or less, preferably 0.2 mm or less or 0.1 mm or less.

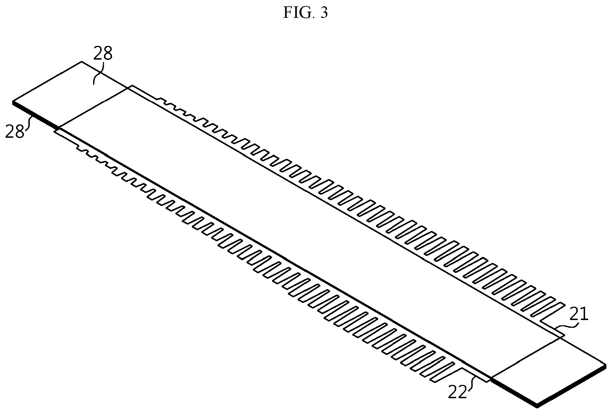

In an embodiment of the present disclosure, an electrode assembly 20 is accommodated inside the battery housing 10. The electrode assembly 20 is manufactured by preparing a first electrode 21, a second electrode 22, and a separator 28, which have predetermined widths and extend in the longitudinal direction, as shown in FIG. 2, stacking the first electrode 21, the separator 28, the second electrode 22, and the separator 28 in sequence, as shown in FIG. 3, to form a laminate, and winding the laminate around a winding axis into a jelly-roll shape.

In an embodiment of the present disclosure, the first electrode 21 may be a positive electrode, and the second electrode 22 may be a negative electrode, or vice versa.

In an embodiment of the present disclosure, the first electrode 21 and the second electrode 22 are manufactured in the form of sheets. The electrode sheet may be manufactured in a form in which an active material layer 24 is coated on the surface of a metal foil 23. The electrode sheet may include a coated portion 25 where the active material layer 24 is applied, and an uncoated portion 26 where the active material layer 24 is not applied. The positive electrode sheet may have an uncoated portion 26 on one widthwise side, and the negative electrode sheet may have an uncoated portion 26 on the other widthwise side.

In an embodiment of the present disclosure, the positive electrode may be manufactured by coating composition for forming a positive electrode, including a positive electrode active material, a binder, a conductive material, and a solvent, on a positive electrode current collector.

In an embodiment of the present disclosure, the positive electrode active material may be any positive electrode active material used in the positive electrode of a conventional electrochemical device. For example, the positive electrode active material may be lithium manganese oxide, lithium cobalt oxide, lithium nickel oxide, lithium iron oxide, or lithium composite oxide of a combination thereof.

In this case, the positive electrode active material may be present in an amount of 80 to 99 wt%, preferably 85 to 98 wt%, with respect to the total solid content of the composition for forming the positive electrode. If the content of the positive electrode active material satisfies the above-described range, it may provide excellent capacity properties.

The positive electrode current collector is not particularly limited as long as it is conductive and does not induce chemical changes in the battery. The positive electrode current collector may be, for example, stainless steel, aluminum, nickel, titanium, calcined carbon, or aluminum or stainless steel surface-treated with carbon, nickel, titanium, silver, or the like.

The binder is a component that aids in the bonding of the active material and the conductive material, as well as the bonding to the current collector, and may be typically added in an amount of 1 to 30 wt% with respect to the total solid weight of the composition for forming the positive electrode. Examples of such binders include polyvinylidene fluoride, polyvinyl alcohol, carboxymethyl cellulose, starch, hydroxypropyl cellulose, regenerated cellulose, polyvinylpyrrolidone, tetrafluoroethylene, polyethylene, polypropylene, ethylene-propylene-diene terpolymer, sulfonated EPDM, styrene-butadiene rubber, fluororubber, and various copolymers.

The conductive material may typically be added in an amount of 1 to 30 wt% with respect to the total solid weight of the composition for forming the positive electrode.

The conductive material is not particularly limited as long as it is conductive and does not induce chemical changes in the battery. Examples of conductive materials may include graphite, carbon-based materials such as carbon black, acetylene black, Ketjen black, channel black, furnace black, lamp black, and thermal black, conductive fibers such as carbon fibers or metal fibers, fluorocarbon, metal powders such as aluminum, and nickel powder, conductive whiskers such as zinc oxide and potassium titanate, conductive metal oxides such as titanium oxide, and polyphenylene derivatives. Specific examples of commercially available conductive materials include acetylene black (available from Chevron Chemical Company), Denka black (available from Denka Singapore Private Limited), conductive carbon products (available from Gulf Oil Company), Ketjenblack, EC series (available from Armak Company), Vulcan XC-72 (available from Cabot Company), and Super P (available from Timcal Company).

In addition, the positive electrode active material layer may optionally include a dispersant as necessary.

Any material used as a dispersant for the positive electrode may be used without particular limitation. For example, an aqueous dispersant or an organic dispersant may be selectively used as necessary. Preferably, the dispersant may be at least one of cellulosebased compounds, polyalkylene oxide, polyvinyl alcohol, polyvinylpyrrolidone, polyvinyl acetal, polyvinyl ether, polyvinylsulfonic acid, polyvinyl chloride, polyvinylidene fluoride, chitosan compounds, starch, amylose, polyacrylamide, poly-N-isopropylacrylamide, poly-N,N-dimethylacrylamide, polyethyleneimine, polyoxyethylene, poly(2-methoxyethoxyethylene), poly(acrylamide-co-diallyldimethylammonium chloride), acrylonitrile-butadiene-styrene polymers, mixtures of acrylonitrile-styrene-acrylate polymers and propylene carbonate, styrene-acrylonitrile copolymers, methyl methacrylateacrylonitrile-butadiene-styrene polymers, styrene-butadiene rubber, nitrile-butadiene rubber, and fluororubber, or a mixture thereof. Hydrogenated nitrile butadiene rubber (H-NBR) may be used therefor. In a case where the positive electrode active material layer further includes a dispersant, the dispersibility of the components of the positive electrode active material layer, particularly the conductive material, may be increased, but is not limited thereto.

In addition, the solvent may be a solvent commonly used in the art, such as dimethylsulfoxide (DMSO), isopropyl alcohol, N-methylpyrrolidone (NMP), acetone, or water, and any one of these may be used alone, or a mixture of two or more may be used. The amount of the solvent used is sufficient to dissolve or disperse the positive electrode active material, conductive material, and binder in consideration of the coating thickness of the slurry and manufacturing yield, and to have a viscosity that allows for excellent thickness uniformity during subsequent coating for manufacturing the positive electrode.

The negative electrode according to the present disclosure may be manufactured by coating a negative electrode forming composition, including the above-described negative electrode active materials, binders, conductive materials, and solvents, on a negative electrode current collector. In addition, the negative electrode forming composition may optionally further include a dispersant as necessary.

The negative electrode active material may be a compound capable of reversible lithium intercalation and deintercalation. Preferably, the negative electrode may be further provided with silicon-based negative electrode active materials exhibiting high capacity; carbon-based negative electrode active material; metal composite oxide such as LiₓFe₂O₃ (0≤x≤1), LiₓWO₂ (0≤x≤1), and SnₓMe₁₋ₓMe'_{y}O_{z} (Me: Mn, Fe, Pb, or Ge; Me': Al, B, P, Si, elements of groups 1, 2, and 3 of the periodic table, or halogen; 0<x≤ 1; 1≤y≤3; and 1≤z≤8); lithium metal; lithium alloy; tin-based alloy; metal oxides such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, and Bi₂O₅; a conductive polymer such as polyacetylene; a Li-Co-Ni-based material; titanium oxide; and lithium titanium oxide. The silicon-based negative electrode active material may include at least one selected from the group consisting of Si, SiOx (0.1<x<5), Si-metal alloys, silicon oxide particles (SiOx) (0.1<x<5) doped or chemically bonded with a metal such as Mg, and alloys of Si and SiOx (0.1<x<5). The carbon-based negative electrode active material may include at least one selected from the group consisting of natural graphite, artificial graphite, amorphous hard carbon, low-crystalline soft carbon, carbon black, acetylene black, Ketjen black, Super P, graphene, and fibrous carbon.

Any material that has high conductivity and does not induce chemical changes in the battery may be used for the negative electrode current collector without particular limitation. For example, copper, stainless steel, aluminum, nickel, titanium, calcined carbon, copper or stainless steel surface-treated with carbon, nickel, titanium, or silver, and aluminum-cadmium alloys may be used. In addition, the negative electrode current collector typically has a thickness of 3 µm to 500 µm, and similar to the positive electrode current collector, the current collector surface may be finely textured to enhance the bonding strength of the negative electrode active material. For example, the negative electrode current collector may be used in various forms, such as films, sheets, foils, nets, porous bodies, foams, and non-woven fabrics.

Any material typically used for forming electrode composition may be applied to the conductive material, binder, solvent, or dispersant included in the negative electrode forming composition without particular limitation. For example, the conductive materials, binders, solvents, or dispersants described above in relation to the positive electrode forming composition may be used in the negative electrode forming composition.

In an embodiment of the present disclosure, the uncoated portion 26 may be exposed or may protrude in the widthwise direction from the laminate, as shown in FIGS. 2 and 3. The uncoated portion 26 may itself function as an electrode tab.

In an embodiment of the present disclosure, the uncoated portion 26 may be notched at predetermined intervals to form flag-shaped notched tabs 27.

In an embodiment of the present disclosure, the notched tab 27 may have an isosceles trapezoidal shape, as shown in FIGS. 2 and 3. Alternatively, it may have the shape of a semicircle, a semi-ellipse, a triangle, a rectangle, or a parallelogram.

In an embodiment of the present disclosure, the notched tabs 27 may be arranged along the longitudinal direction and may have the same width. However, the width of the notched tabs may also gradually or stepwise increase from the winding core toward the outer periphery.

In an embodiment of the present disclosure, the height of the notched tabs 27 may increase stepwise from the winding core toward the outer periphery. However, the height of the notched tabs 27 may also be constant or gradually decrease.

In an embodiment of the present disclosure, the notched tab 27 may be omitted from a predetermined section of the radially inner end and a predetermined section of the radially outer end of the uncoated portion 26. However, it should be understood that the notched tab may not be omitted from the radially inner end of the uncoated portion, and that the notched tab may not be omitted from the radially outer end of the uncoated portion.

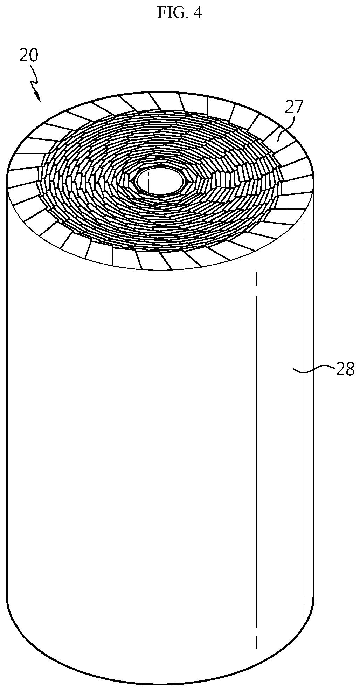

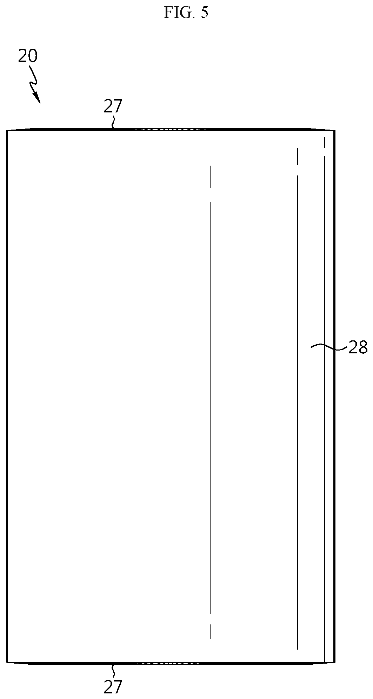

In an embodiment of the present disclosure, in the jelly-roll-type electrode assembly 20, the notched tab 27 may be radially bent and flattened. The notched tab 27 may be bent radially inward or outward. For example, as shown in FIGS. 4 and 5, the notched tab 27 may be bent radially inward.

In an embodiment of the present disclosure, the notched tabs 27 may be individually bent during the process of winding a laminate to form a jelly-roll-type electrode assembly 20. Alternatively, the notched tabs 27 may be bent and processed simultaneously after the laminate is wound to form a jelly-roll-type electrode assembly.

In an embodiment of the present disclosure, the notched tabs 27 of the first electrode 21 and the notched tabs 27 of the second electrode 22, which are bent in the radial direction to overlap each other, may provide planes substantially perpendicular to the winding axis direction at both axial ends of the electrode assembly 20, respectively, as shown in FIG. 5.

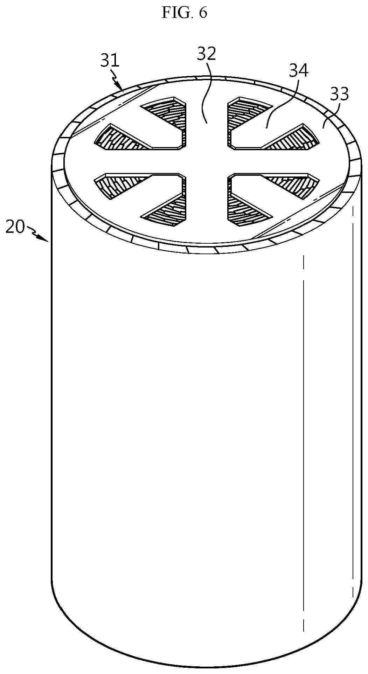

In an embodiment of the present disclosure, as shown in FIG. 6, a current collector 31 may be joined to the substantially flat surfaces provided by bending the notched tabs 27 exposed to the both axial ends of the electrode assembly 20.

In an embodiment of the present disclosure, the current collector 31 may be manufactured by punching, trimming, piercing, and bending a metal sheet.

In an embodiment of the present disclosure, referring to FIG. 6, the current collector 31 may include a terminal-connecting portion 32 extending radially from the center, a ring portion 33 connecting the distal edges of the terminal-connecting portion 32 in a circumferential direction, and an electrode-connecting portion 34 extending from the ring portion 33 toward the center but not connected to the terminal-connecting portion 32. The central portion of the terminal-connecting portion 32 may cover at least a portion of the central winding hole of the electrode assembly 20.

In an embodiment of the present disclosure, the electrode-connecting portion 34 may be joined to the notched tabs 27 of the first electrode 21 of the electrode assembly 20 by laser welding or the like before the electrode assembly 20 is inserted into the battery housing 10.

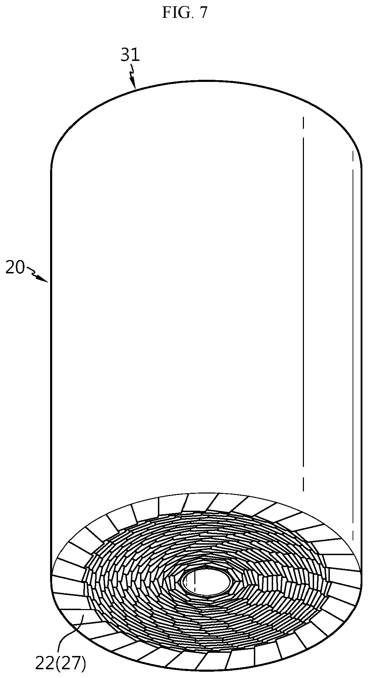

In an embodiment of the present disclosure, referring to FIG. 7, a current collector may not be connected to the notched tabs 27 of the second electrode 22 of the electrode assembly 20. The present disclosure is not limited to a structure in which a current collector is not connected to the notched tab 27 of the second electrode 22.

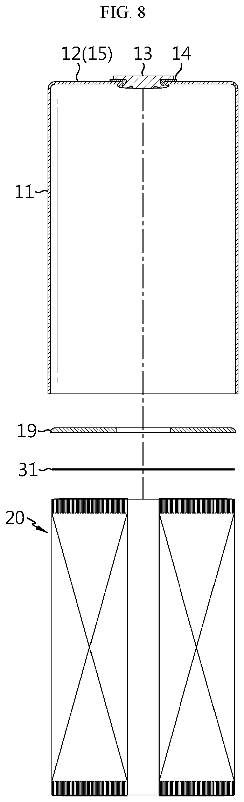

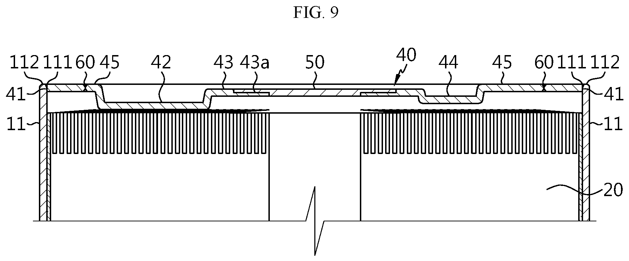

In an embodiment of the present disclosure, as shown in FIGS. 8 and 9, the electrode assembly 20 may be accommodated in the battery housing 10 while the current collector 31 is aligned to face the bottom portion 12 of the battery housing 10. In this case, an insulator 16 may be interposed between the current collector 31 and the bottom portion 12 of the battery housing 10 to electrically insulate the current collector 31 from the bottom portion 12.

In an embodiment of the present disclosure, the terminal-connecting portion 32 of the current collector 31 may be joined to the first electrode terminal 13 fixed to the battery housing 10 by resistance welding, ultrasonic welding, or laser welding. The welding device for welding the current collector 31 and the first electrode terminal 13 may access the rear surface of the center of the terminal-connecting portion 32 of the current collector 31 through the central winding hole of the electrode assembly 20, thereby performing welding. Alternatively, the current collector 31 and the first electrode terminal 13 may also be joined using other methods, such as brazing or soldering. That is, any method of electrically connecting and securing the current collector 31 and the first electrode terminal 13 to each other may be applicable.

In the state in which the electrode assembly 20 is accommodated in the battery housing 10 and in which the first electrode 21 is connected to the first electrode terminal 13, the notched tab 27 of the second electrode 22 may be directly connected to the lid 40 that is press-fitted through the open end of the battery housing 10. Therefore, the second electrode 22 is electrically connected through the welding portion of the notched tab 27 and the lid 40. Other joining methods, such as brazing or soldering, may also be applied to the notched tab 27 and the lid 40, in addition to welding.

In an embodiment of the present disclosure, the outer circumferential surface 41 of the lid is electrically connected to the abutment portion 113 of the battery housing, thereby sealing and securing the lid. Therefore, the second electrode 22 may be electrically connected to the lid 40 and the battery housing 10. The joint between the lid 40 and the battery housing 10 may be performed using various methods, such as welding, brazing, and soldering, that allow for electrical connection and sealing.

In an embodiment of the present disclosure, the lid 40 may be manufactured by pressing and forming a circular metal sheet.

In addition, the lid 40 may have a substantially disc shape to seal the open end of the battery housing 10.

The outer circumferential surface 41 of the lid 40 may be formed substantially parallel to the axial direction. More specifically, the outer circumferential surface 41 of the lid 40 may be formed substantially parallel to the side wall 11 of the battery housing 10.

Here, the expression "substantially" may indicate allowing for a difference within an error range of the measuring instrument when measuring the parallelism between the lid 40 and the side wall 11, based on a cross-section parallel to the axial direction.

In an embodiment of the present disclosure, the height of the outer circumferential surface 41 of the lid may be 0.5 mm to 0.8 mm, or more preferably 0.55 mm to 0.75 mm, based on a cross-section parallel to the axial direction. With the height of the outer circumferential surface 41 of the lid satisfying the range, it is possible to secure high energy density and excellent electrical resistance properties of the battery while maintaining its mechanical strength.

The outer circumferential surface 41 of the lid 40 and the abutment portion 113 of the battery housing 10 are coupled to each other.

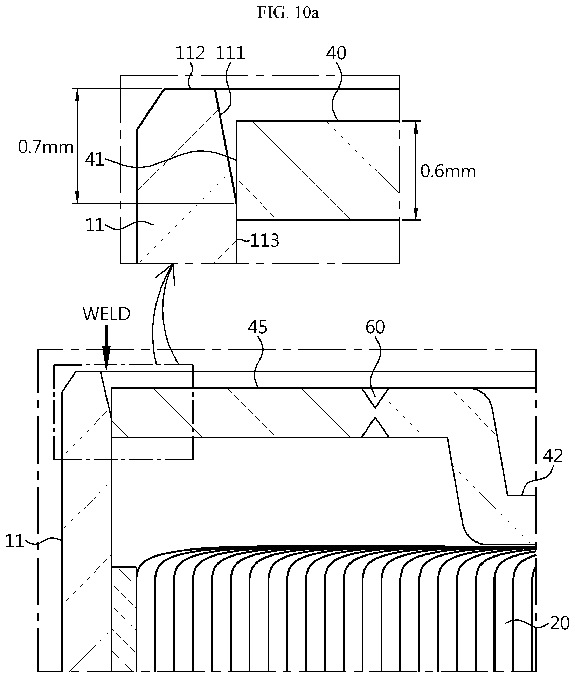

The structure of a conventional battery is shown in FIG. 10A.

As described above, when the battery housing 10 is manufactured through a trimming process, a first inclined portion 111 is formed at the other end of the side wall so that the inner diameter of the battery housing increases in the axially outward direction.

In this case, the height of the first inclined portion 111 is about 0.7 mm, and the height of the outer circumferential surface of the lid 40, i.e., the thickness of the lid 40, is about 0.6 mm, resulting in insufficient contact between the battery housing 10 and the lid 40. Therefore, even if the battery housing 10 and the lid 40 are welded, there is a problem in that the welding strength is not sufficiently secured. In addition, since the contact between the outer circumferential surface 41 of the lid 40 and the side wall 11 of the battery housing is insufficient, a difference may occur between the height of the outer surface of the lid 40 and the height of the horizontal portion 112 of the side wall 11.

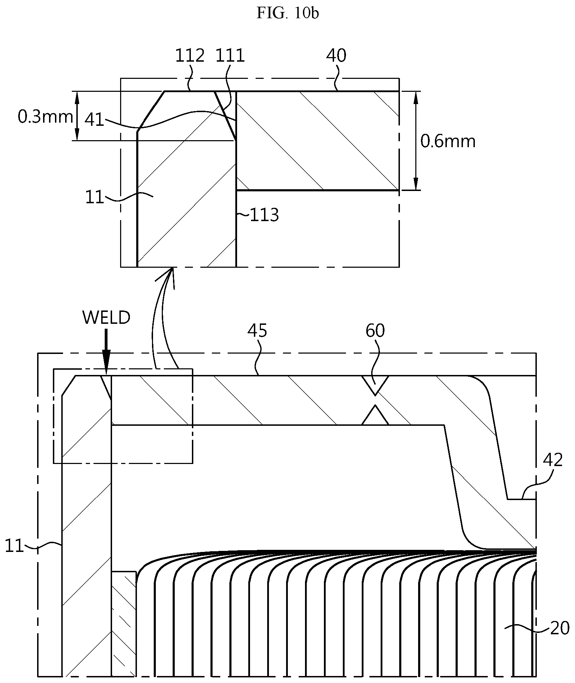

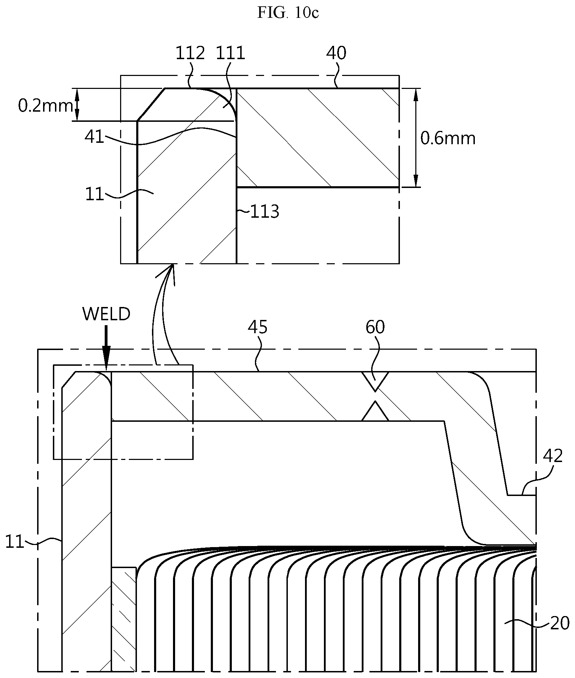

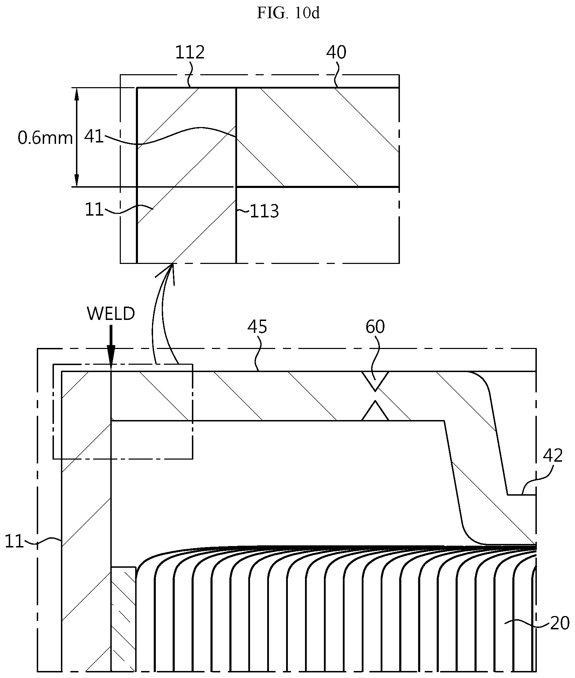

FIGS. 10B, 10C, and 10D are schematic enlarged views illustrating the coupling portion of the battery housing and the lid.

According to one aspect of the present disclosure, the battery 1 has an abutment portion 113 formed on a portion of the inner surface of the other axial end of the side wall 11, and the outer circumferential surface 41 of the lid 40 is coupled to the abutment portion 113.

The abutment portion 113 is a portion of the inner surface of the side wall 11, and may be, for example, a portion of the inner surface of the other axial end of the side wall.

In addition, in the case where the first inclined portion 111 is formed, the abutment portion 113 may include a portion continuous with the first inclined portion 111, and in the case where the first inclined portion 111 is not formed, the abutment portion 113 may include an inner surface connected to the horizontal portion 112.

In an embodiment of the present disclosure, based on a cross-section parallel to the axial direction, the abutment portion 113 may contact the outer circumferential surface 41 of the lid 40 by at least 40%, preferably at least 50% or 60%, of the height of the outer circumferential surface of the lid. When the above contact range is satisfied, the sealing performance and mechanical strength of the battery may be further improved.

For example, when the height of the outer circumferential surface 41 of the lid is 0.6 mm, the contact length between the abutment portion 113 and the outer circumferential surface 41 of the lid, based on a cross-section parallel to the axial direction, may be at least 0.24 mm, preferably at least 0.3 mm or 0.36 mm.

In addition, in an embodiment of the present disclosure, the abutment portion 113 may contact the outer circumferential surface 41 of the lid, based on a cross-section parallel to the axial direction, by a length of 0.3 mm or more, preferably 0.35 mm or more or 0.4 mm or more. Even in this case, by satisfying the above contact range, the sealing and mechanical strength of the battery may be further improved.

In an embodiment of the present disclosure, when the lid 40 is fully press-fitted, there may be no substantial step between the horizontal portion 112 and the outer surface of the lid 40. That is, when the lid 40 is press-fitted into the battery housing 10 and functions, the outer circumferential surface of the lid 40 and the abutment portion 113 of the battery housing 10 may be substantially horizontal.

For example, as shown in FIGS. 10B and 10C, in the case where the outer circumferential surface 41 of the lid and the abutment portion 113 of the battery housing 10 are coupled to be in sufficient contact with each other, the difference between the height of the horizontal portion 112 from the electrode assembly 20 and the height of the outer surface of the lid 40 from the electrode assembly 20, when the lid 40 is fully press-fitted, may be 30% or less, preferably 20% or less, 10% or less, or 5% or less, of the height of the outer circumferential surface of the lid 41.

In this case, the height may be measured based on the electrode assembly 20, for example, the notched tab 27 of the electrode assembly 20, and they may be maintained in a state where there is substantially no difference in height.

In an embodiment of the present disclosure, the first inclined portion 111 may be formed by a trimming process, a cutting process, or a combination thereof for the battery housing 10.

In addition, in an embodiment of the present disclosure, the battery 1 may be connected to the abutment portion 113 as shown in FIG. 10B, and the first inclined portion 111 may be formed such that the inner diameter of the battery housing 10 increases in the axially outward direction. In this case, the outer circumferential surface 41 of the lid 40 may be in contact with the abutment portion 113.

The battery housing 10 shown in FIG. 10B may be manufactured, as shown in FIG. 1E, by forming a conductive metal sheet through a deep drawing process, positioning a die D on the outer surface of the battery housing 10, and forming the inner surface of the battery housing into a shape close to a right angle or having a flat portion using an angle forming trimming punch P12.

Thereafter, a die D is positioned on the outer surface of the battery housing 10, and a trimming portion T is removed using a cutting means provided in the punch P2, thereby forming the first inclined portion 111 on the side wall.

In this case, the height of the first inclined portion 111 may be 0.3 mm or less, preferably 0.25 mm or less, 0.2 mm or less, 0.15 mm or less, or 0.1 mm or less. When the height of the first inclined portion 111 is adjusted to satisfy the above range, the length of the abutment portion 113 may increase to allow a sufficient area for contact with the outer circumferential surface 41 of the lid 40, thereby ensuring excellent mechanical strength of the battery.

In an embodiment of the present disclosure, the first inclined portion 111 may be a flat inclined portion, a curved inclined portion, or a combination thereof. For example, as shown in FIG. 1E, depending on the shape of an angle forming trimming punch P12, the first inclined portion 111 may be formed as a flat inclined portion, a curved inclined portion, or a combination of the flat inclined portion and the curved inclined portion.

In an embodiment of the present disclosure, the first inclined portion 111 may be a curved inclined portion, as shown in FIG. 10C. In this case, the height of the first inclined portion 111 may be 0.2 mm or less, 0.15 mm or less, or 0.1 mm or less.

In this case, the first inclined portion 111 extends to the point where the flat inclined portion or the curved inclined portion in FIG. 10B or 10C ends, and a portion of the side wall 11 connected to the first inclined portion 111 and parallel to the axial direction may be formed as the abutment portion 113.

In another embodiment of the present disclosure, the battery housing 10 may not have a first inclined portion 111 formed as shown in FIG. 10D, depending on the method of the cutting process. In this case, the side wall 11 may be formed such that the horizontal portion 112 and the abutment portion 113 are connected to each other.

The abutment portion 113 may be formed by a cutting process, as shown in FIG. 10C, and may contact the outer circumferential surface 41 of the lid 40 by 0.5 mm or more, preferably 0.6 mm or more, based on a cross-section parallel to the axial direction. That is, the abutment portion 113 may be configured to contact the outer circumferential surface 41 of the lid 40 over its entire area.

Meanwhile, even when the battery housing 10 is processed by a cutting process, the first inclined portion 111 may be formed. In this case, the height of the first inclined portion 111 may be configured as 0.1 mm or less, more preferably 0.05 mm or less.

In an embodiment of the present disclosure, the outer circumferential surface 41 of the lid and the abutment portion 113 of the battery housing may be welded to form a weld. The welding may include laser welding, ultrasonic welding, CO₂ welding, or the like.

In an embodiment of the present disclosure, the battery housing 10 may include a horizontal portion 112 connected to the first inclined portion 111 and perpendicular to the axial direction. The horizontal portion 112 may have substantially no step at the contact portion with the outer surface of the lid 40. In other words, the horizontal portion 112 and the outer surface of the lid 40 may have the same height from the notched tabs 27 of the electrode assembly 20. With this configuration, in the case where the other end of the battery is used as the bottom of the battery pack, the contact area with the battery pack housing may be large, resulting in excellent heat exchange or the like.

In an embodiment of the present disclosure, the lid 40 may have an asymmetric cross-section, which is parallel to the axial direction, with respect to the radially inner center, as shown in FIG. 9.

That is, the lid 40 may sequentially include an outer circumferential surface 41, an electrode-connecting portion 42, a flat portion 43, a bridge 44, and a support surface 45 in the radially inward direction from the outer side.

In an embodiment of the present disclosure, the support surface 45 may extend horizontally in the radially inward direction. The outer surface of the support surface 45 is flat, so it may serve as a foot for the battery when battery is placed so that the lid 40 faces the floor.

In an embodiment of the present disclosure, the support surface 45 may have the same height as the horizontal portion 112 of the battery housing. That is, the support surface 45 may have the same height from the notched tab 27 of the electrode assembly.

In an embodiment of the present disclosure, an electrode-connecting portion 42 may be provided radially inward of the support surface 45 on the lid 40 so as to extend horizontally in the radial direction. Referring to FIG. 9, the electrode-connecting portion 42 may be provided at a position that is recessed axially inward.

In an embodiment of the present disclosure, the press-fit depth of the lid 40 into the battery housing 10 may be determined by the connection portion between the electrode-connecting portion 42 of the lid 40 and the tab of the second electrode 22 of the electrode assembly 20 accommodated in the battery housing 10. That is, the bottom surface of the electrode-connecting portion 42 may be provided closest to the electrode assembly 20 on the bottom surface of the lid 40. In this case, when the electrode-connecting portion 42 is coupled to the electrode assembly 20, the remaining portion of the lid 40, excluding the electrode-connecting portion 42, may be spaced apart from the electrode assembly 20.

In an embodiment of the present disclosure, the electrode-connecting portion 42 may be in close contact with the tab of the second electrode 22 of the electrode assembly 20, and they may be joined to each other. They may be joined by welding. As shown in FIG. 9, a weld between the electrode-connecting portion 42 and the notched tab 27 of the second electrode 22 may be formed by irradiating a laser beam onto the axially outer surface of the electrode-connecting portion 42 from the outside in the axial direction. The laser beam may be irradiated in a scanning manner along the radial direction to form the weld W that extends in the radial direction. The electrode-connecting portion 42 may be joined face-to-face with the electrode assembly 20. The electrode-connecting portion 42 may be coupled to the metal foil 23.

As described above, the lid 40 functions as a cover that closes the open end of the battery housing 10 while also functioning as a current collector for the second electrode 22. Therefore, the lid 40 may have a second polarity, and the side wall 11 welded thereto and the bottom portion 12 connected thereto may also have a second polarity.

In an embodiment of the present disclosure, the electrode-connecting portion 42 may extend radially outward by half the radius of the battery housing 10 or more. Preferably, the electrode-connecting portion 42 may extend at least 0.7 times the radius of the battery housing 10. The electrode-connecting portion 42 may extend radially in a flat shape.

In an embodiment of the present disclosure, the electrode-connecting portion 42 may occupy at least 50% of the total area of the battery housing 10.

In an embodiment of the present disclosure, the electrode-connecting portion 42 of the lid 40 may have a bottom surface that extends in a flat shape with a sufficient width, thereby securing a sufficient welding area with the tab of the second electrode 22.

In an embodiment of the present disclosure, a current collector may be electrically joined to the tab of the second electrode 22, and the electrode-connecting portion 42 may be joined to the current collector so as to be electrically connected to the tab of the second electrode 22. That is, the current collector may be welded to the tab of the second electrode 22, and the electrode-connecting portion 42 of the lid 40 may be welded to the current collector 31.

In another embodiment of the present disclosure, the electrode-connecting portion 42 may be directly and electrically joined to the tab of the second electrode 22.

Specifically, the tab of the second electrode 22 may be welded and electrically connected to the electrode-connecting portion 42 of the lid 40 without a separate current collector. That is, since the lid 40 may be coupled to the battery housing 10 to cover the open end of the battery housing 10 while also being electrically connected to the electrode assembly 20, a separate current collector, such as a negative electrode current collector, may not be provided. That is, the lid 40 of the present disclosure may be provided as a so-called integrated lid capable of functioning as a current collector as well. Accordingly, the joint between the lid 40 and the battery housing 10 may be simplified, and the current collector 31 is not required to electrically connect the electrode assembly 20 to the lid 40, thereby reducing the number of parts and assembly work, securing more internal volume, and further increasing energy density.

In an embodiment of the present disclosure, the joint between the electrode-connecting portion 42 and the tab of the second electrode 22 may extend in the radial direction. That is, the electrode-connecting portion 42 may extend toward the flat portion 43 and the support surface 45. Specifically, the electrode-connecting portion 42 may extend in the centripetal direction to the flat portion 43, and the electrode-connecting portion 42 may extend radially toward the support surface 45. In this case, since the weld length (of lid foil tab welding (LFW)) between the electrode-connecting portion 42 and the metal foil 23 may be secured long, the internal resistance of the battery cell may be reduced.

In an embodiment of the present disclosure, a plurality of electrode-connecting portions 42 may be provided and arranged radially with respect to the center of the lid 40, and spaced apart from each other at regular intervals in the circumferential direction.

In an embodiment of the present disclosure, three electrode-connecting portions 42 may be provided at 120° intervals.

In an embodiment of the present disclosure, three electrode-connecting portions 42 may be provided. In a case where three electrode-connecting portions 42 are provided, the plurality of electrode-connecting portions 42 may form a single plane, making it easier to secure a stable flat surface with the electrode assembly 20. In addition, the lid 40 may secure bonding strength by locally contacting only the welding point of the notched tab 27 of the second electrode, and may ensure resistance to bulging of the lid 40 due to the internal pressure of the battery cell.

In an embodiment of the present disclosure, the lid 40 may further include one or more bridges 44. The bridges 44 may be provided in plurality, for example, three. The bridges 44 may extend in the radial direction from the flat portion 43. The bridge 44 may be formed to partition two adjacent electrode-connecting portions 42.

In an embodiment of the present disclosure, the bridges 44 allow the plurality of electrode-connecting portions 42 to be more securely partitioned and separated. As described above, the bridges 44 may reinforce the rigidity of the lid 40.

In an embodiment of the present disclosure, the upper surface of the bridge 44 may be formed further axially outward than the upper surface of the electrode-connecting portion 42, but further axially inward than the upper surface of the flat portion 43. When the bridges 44 are formed in this manner, the rigidity of the lid 40 may be further reinforced.

In an embodiment of the present disclosure, the protrusion height of the bridge 44 may correspond to or be lower than the protrusion height of the support surface 45.

In an embodiment of the present disclosure, the protrusion height of the bridge 44 may correspond to the protrusion height of the support surface 45, so that they form a single plane. In this case, when the battery housing 10 is placed upright with its lid 40 facing the floor, the bridge 44 and the support surface 45 may also contact the floor.

In an embodiment of the present disclosure, if the height of the bridge 44 is lower than the support surface 45, the support surface 45 may provide an annular support surface.

In an embodiment of the present disclosure, the lid 40 of the present disclosure may further include an injection hole at the center of the lid 40. In the state where the open end of the battery housing 10 is covered by the lid 40, the injection hole may be aligned with the central winding hole of the electrode assembly 20 accommodated in the battery housing 10.

In an embodiment of the present disclosure, the injection hole may be provided on the bottom surface of the lid 40, i.e., on the flat portion 43 that protrudes axially outward from the electrode-connecting portion 42 of the lid 40, as shown in FIG. 9 or other drawings. The height of the flat portion 43 may be lower than the height of the support surface 45. The flat portion 43 may be connected to the radially inner edge of the electrode-connecting portion 42 and may extend axially outward as it approaches radially inward.

In an embodiment of the present disclosure, the injection hole may be closed by a cap 50 covering it, as shown in FIG. 9. The edge of the cap 50 may be sealed with the edge of the injection hole. The sealing may be achieved by seam welding or other known sealing methods.

In an embodiment of the present disclosure, the cap 50 may be in the form of a plug and may be formed by deep-drawing a thin metal sheet of 0.3 mm.

In an embodiment of the present disclosure, in the state where the injection hole is covered by the cap 50, the height of the cap 50 may be lower than the height of the support surface 45. Since the cap 50 is also positioned lower than the support surface 45, even when the battery cell is placed upright with the lid 40 in contact with the ground, the cap 50 may not be subject to a direct load.

In an embodiment of the present disclosure, the flat portion 43 protrudes further axially outward than the bottom of the lid, i.e., the electrode-connecting portion 42. Accordingly, the edge of the injection hole is positioned apart from the notched tab 27 of the second electrode 22. Therefore, when injecting electrolyte through the injection hole, covering the injection hole with the cap 50, and joining it by welding or other methods, the influence of the closing joint process of the cap 50 on battery performance, such as the propagation of joining heat to the electrode assembly 20 and damage to the separator, may be minimized.

Meanwhile, in another embodiment of the present disclosure, the lid 40 may not include a separate injection hole. In this case, when manufacturing a battery cell, if there is no separate injection hole, such as in the bottom portion 12 of the battery housing 10, the electrolyte injection process may be performed before covering the battery housing 10 with the lid 40.

However, if the lid 40 further includes the injection hole, the electrolyte may be injected through the injection hole even after the lid 40 is press-fitted into the battery housing 10 and the weld W and the joint M are formed. This prevents the electrolyte from being affected by the joining heat, compared to joining the lid 40 to the battery housing 10 after the electrolyte has been injected. In addition, since the flat portion 43 protrudes upward, it is possible to reduce the possibility of the electrolyte being influenced by the joining heat of the cap 50 when joining the cap 50 and the edge of the injection hole.

In an embodiment of the present disclosure, the injection hole formed in the center of the lid 40 may also serve as a passage for the equipment for welding the first electrode terminal 13 and the current collector 31 of the first electrode 21.

Accordingly, even after the lid 40 is joined to the battery housing 10, it is possible to insert the welding equipment into the battery housing 10 through the injection hole, thereby joining the first electrode 21 and the first electrode terminal 13.

In an embodiment of the present disclosure, the flat portion 43 may further include a mounting portion 43a that is recessed axially inward and extends radially in a flat shape. In an embodiment of the present disclosure, the configuration of the mounting portion 43a may minimize interference with the electrolyte when welding the cap 50 to the injection hole.

In an embodiment of the present disclosure, an increase in the length of the mounting portion 43a, which is formed between the injection hole and the flat portion 43, may improve weldability to the cap 50.

In an embodiment of the present disclosure, a vent portion 60 may be formed in the lid 40. When a thermal event occurs in the battery cell, the vent portion 60 may be ruptured by the internal pressure of high-temperature venting gas, thereby allowing the venting gas to be discharged from the battery cell to the outside.

In an embodiment of the present disclosure, the lid 40 may include a support surface 45 extending radially in a flat shape, and the electrode-connecting portion 42 may be provided radially inward of the support surface 45 to be axially recessed, and the vent portion 60 may be provided in the support surface 45.

In an embodiment of the present disclosure, the vent portion 60 may be provided radially outward of the electrode-connecting portion 42 along the circumferential direction. The vent portion 60 may be implemented as a soft or thin portion by notching both surfaces of the support surface 45.

In an embodiment of the present disclosure, the vent portion 60 has sufficient strength to prevent deformation thereof under the force applied when the lid 40 is press-fitted into the battery housing 10. When the internal pressure of the battery housing 10 surges due to a short circuit or the like occurring therein, the vent portion 60 breaks to separate the electrode-connecting portion 42 of the lid 40 and the outer circumferential surface 41 of the lid 40. Accordingly, the electrical connection between the electrode-connecting portion 42 connected to the tab of the second electrode 22 and the battery housing 10 may be severed, and the inner space of the battery housing 10 may be open to the outside, thereby discharging the gas causing the internal pressure.

In an embodiment of the present disclosure, the vent portion 60 may be provided near the center of the support surface 45. In this case, even if the support surface 45 is pressurized, the pressurizing force is transmitted to the inclined surface connected to the electrode-connecting portion 42 and does not affect the vent portion 60. Therefore, the force applied when joining the lid 40 to the battery housing 10 and the electrode assembly 20 may not deform the vent portion 60.

In an embodiment of the present disclosure, the vent portion 60 may be provided further radially outward than the bridge 44. Then, the bridges 44 may be provided between the electrode-connecting portions 42 in the circumferential direction.

In an embodiment of the present disclosure, when the internal pressure of the battery housing 10 increases, the pressure is smoothly transmitted to the lower space of the bridges 44 disposed between the electrode-connecting portions 42 in the circumferential direction and acts as a force that lifts the bridges 44 upward. In addition, this force is concentrated at three locations along the circumferential direction. Therefore, the internal pressure of the battery housing 10 may be smoothly transferred to the vent portion 60, thereby inducing smooth rupture of the vent portion 60.

In an embodiment of the present disclosure, the rupture pressure of the battery housing 10 may be controlled by controlling the vent portion 60 and its width. For example, the vent portion 60 may be configured to rupture when the pressure inside the battery housing 10 falls within the range of 15 to 35 kgf/cm². The vent portion 60 may be formed by notching the lid 40 to partially reduce the thickness thereof. The vent portion 60 may have a thickness gradient. A thickness gradient means that the vent portion 60 is formed at a certain angle with respect to a predetermined horizontal plane on the cross-section. This vent portion 60 ruptures when the pressure inside the battery housing 10 abnormally increases, thereby discharging all internal gas to the outside.

In an embodiment of the present disclosure, the vent portion 60 may be implemented in the form of a thin portion on the support surface 45. However, the vent portion 60 formed by the lid 40 is not limited thereto. For example, the vent portion may be provided in the cap 50 covering the injection hole, may be configured by the joint between the injection hole and the cap 50, or may be configured by the joint M between the lid 40 and the battery housing 10.

A hole may be formed in the center of the bottom portion 12 of the battery housing, and the first electrode terminal 13 may be fitted into the hole. The first electrode terminal 13 may be riveted and fixed to the bottom portion 12 with a terminal gasket 14 interposed therebetween. The terminal gasket 14 may be interposed between the first electrode terminal 13 and the bottom portion 12 to seal the inside and outside of the battery housing 10, thereby preventing electrolyte leakage and electrically insulating the first electrode terminal 13 and the bottom portion 12 from each other.

However, the coupling method between the first electrode terminal 13 and the bottom portion 12 is not limited thereto. For example, various other fixing methods, such as bolt-and-nut joints, glass seals, or chrome coating and PP-MAH thermal bonding, capable of sealing the gap between the first electrode terminal 13 and the bottom portion 12 and electrically insulating them are also applicable.

The first electrode terminal 13 may have a first polarity, and the battery housing 10 may have a second polarity. Accordingly, both the bottom portion 12 of the battery housing 10 and the side wall 11 connected thereto may have the second polarity.

Accordingly, the battery housing 10 may have both the first electrode terminal 13 and the second electrode terminal 15 positioned at one axial end. In this case, the battery housing 10 may have both a busbar connected to the first electrode terminal 13 and a busbar connected to the second electrode terminal 15, which are positioned at one axial end of the battery housing 10.

In an embodiment of the present disclosure, the first electrode terminal 13 may be a positive electrode terminal, and the second electrode terminal 15 may be a negative electrode terminal, or vice versa.

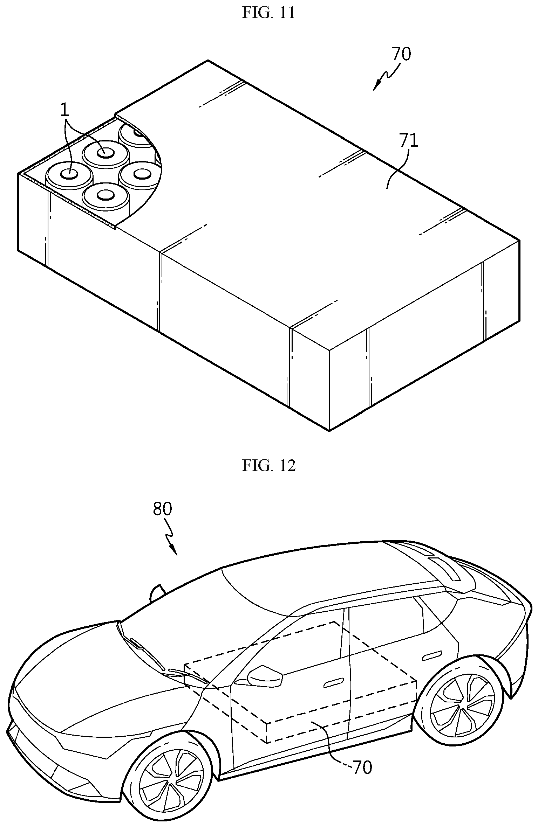

Referring to FIG. 11, the battery 1 with the lid described above may be accommodated in the housing 71 of a battery pack 70. The battery pack 70 may be configured using a battery module, which is an intermediate assembly form, or may be configured directly without a battery module, as shown in the drawing.

Since the battery 1 described above has a large volume on its own, there is no particular difficulty in implementing the battery pack 70 even without using an intermediate structure called a battery module. In addition, since the second electrode of the battery 1 is connected through the lid, the battery may have lower internal resistance and higher energy density. In addition, since the vent portion 60 is provided in the lid 40 and does not occupy a separate space, it is possible to further secure energy density. Accordingly, the energy density of the battery pack 70 equipped with the battery 1 may be realized even higher.

The battery pack 70 with this increased energy density may store the same amount of energy while reducing its volume and weight. Therefore, when the battery pack 70 equipped with such a battery 1 is mounted to a vehicle 80 that uses electricity as its energy source, as shown in FIG. 12, the vehicle's mileage per unit energy may be further increased.

The previously disclosed embodiments should be considered as those intended to describe the present disclosure, instead of those intended to limit the present disclosure. Thus, the scope of the present disclosure, represented by the claims below instead of the above detailed description, should be construed as encompassing the claims and all modifications and variations derived from equivalent concepts of the present disclosure.

As described above, although the present disclosure has been described with reference to limited embodiments and drawings, the present disclosure is not limited thereto, and various modifications and variations are possible without departing from the technical idea of the present disclosure and the scope of equivalence of the claims to be described below by those skilled in the art to which the present disclosure pertains. Therefore, the above-described embodiments should be considered illustrative rather than restrictive. That is, the true scope of the present disclosure is defined by the claims, and all variations or modifications equivalent thereto should be interpreted as falling within the scope of the present disclosure.

## Claims

1. A battery comprising:
a battery housing having a side wall, a bottom portion connected to one axial end of the side wall, and an open end provided at the other axial end of the side wall;
an electrode assembly having a first electrode, a second electrode, and a separator interposed therebetween, which are wound around a winding axis, and accommodated inside the battery housing so that a tab of the second electrode is directed to the open end; and
a lid configured to cover the open end and coupled to the battery housing,
wherein an abutment portion is formed on a portion of an inner surface of the other axial end of the side wall, and
wherein an outer circumferential surface of the lid and the abutment portion are coupled to each other.

2. The battery of claim 1,
wherein the abutment portion is in contact with the outer circumferential surface of the lid by 40% or more of a height of the outer circumferential surface of the lid, based on a cross-section parallel to an axial direction.

3. The battery of claim 1,
wherein the abutment portion is in contact with the outer circumferential surface of the lid by a length of 0.3 mm or more, based on a cross-section parallel to an axial direction.

4. The battery of claim 1,
wherein a height of the outer circumferential surface of the lid is 0.5 mm to 0.8 mm, based on a cross-section parallel to an axial direction.

5. The battery of claim 1,
wherein the battery housing comprises a horizontal portion perpendicular to an axial direction, and
wherein a plating layer is formed on the horizontal portion.

6. The battery of claim 5,
wherein, at a maximum press-fit depth of the lid, there is substantially no step between the horizontal portion and an outer surface of the lid.

7. The battery of claim 1,
wherein a first inclined portion is formed to be connected to the abutment portion and such that an inner diameter of the battery housing increases in an axially outward direction.

8. The battery of claim 7,
wherein a height of the first inclined portion is 0.3 mm or less.

9. The battery of claim 7,
wherein the first inclined portion is a flat inclined portion, a curved inclined portion, or a combination thereof.

10. The battery of claim 7,
wherein the first inclined portion is formed by a trimming process, a cutting process, or a combination thereof for the battery housing.

11. The battery of claim 1,
wherein the abutment portion is formed by a cutting process, and
wherein the abutment portion is in contact with the outer circumferential surface of the lid by 0.5 mm or more, based on a cross-section parallel to an axial direction.

12. The battery of claim 1,
wherein the bottom portion of the battery housing has a first electrode terminal provided to be electrically insulated from and fixed to the bottom portion, and
wherein the first electrode of the electrode assembly is electrically connected to the first electrode terminal.

13. A battery pack comprising a battery cell of any one of claims 1 to 12.

14. A vehicle comprising a battery pack of claim 13.
